(19) Europäisches Patentamt
European Patent Office
Office européen des brevets

(11) **EP 2 396 907 B1**

(12) **EUROPEAN PATENT SPECIFICATION**

(45) Date of publication and mention of the grant of the patent:
**29.12.2021 Bulletin 2021/52**

(21) Application number: **10741612.5**

(22) Date of filing: **09.02.2010**

(51) Int Cl.:
*H04B 7/04* *(2017.01)*     *H04L 27/26* *(2006.01)*

(86) International application number:
**PCT/US2010/023601**

(87) International publication number:
**WO 2010/093613 (19.08.2010 Gazette 2010/33)**

(54) **BACKFIRE DISTRIBUTED ANTENNA SYSTEM (DAS) WITH DELAYED TRANSPORT**

VERTEILTES BACKFIRE-ANNENSYSTEM MIT VERZÖGERTEM TRANSPORT

SYSTÈME D'ANTENNES DITRIBUÉES (DAS) RÉTRODIRECTIVES À TRANSPORT RETARDÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.02.2009 US 370474**

(43) Date of publication of application:
**21.12.2011 Bulletin 2011/51**

(73) Proprietor: **CommScope Technologies LLC Hickory, NC 28602 (US)**

(72) Inventors:
• **FISCHER, Larry**
  **Waseca**
  **Minnesota 56093 (US)**
• **TOLSTRUP, Morten**
  **DK-9330 Dronninglund (DK)**

(74) Representative: **Gill Jennings & Every LLP**
  **The Broadgate Tower**
  **20 Primrose Street**
  **London EC2A 2ES (GB)**

(56) References cited:
  **KR-B1- 950 005 818     US-A1- 4 475 246**
  **US-A1- 5 127 101       US-B1- 6 308 085**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS

This Application is a continuation-in-part of, and claims priority to, U.S. Application Serial Number 12/370474 entitled "DISTRIBUTED ANTENNA SYSTEM (DAS) WITH DELAYED TRANSPORT TO PAIRED ANTENNAS" filed on February 12, 2009.

BACKGROUND

With approximately 80% of voice mobile cellular users located indoors, cellular networks and systems such as Universal Mobile Telecommunications System (UMTS) aim to provide consistent indoor coverage. Around 95% of data mobile cellular users reside inside buildings, typically using High-Speed Downlink Packet Access (HSDPA). HSDPA is a high speed data service that can be deployed on top of the UMTS layer. HSDPA performance inside buildings especially poses a coverage challenge to traditional strategies.

Buildings create high penetration losses, high power load per user, and drain the capacity of the UMTS. Inside buildings there is very often a lack of single cell dominance, resulting in larger soft handover zones. Due mainly to the lack of isolation between several serving cells, HSDPA performance is limited. UMTS/HSDPA is a noise sensitive system, thus HSDPA performance, namely data speed, is dependent on the signal to noise ratio (SNR) and the signal to interference ratio (SIR). Improving HSDPA performance depends on the geometry factor, G, given as:

$$G = \frac{\text{Re}\,ceived\,Signal}{Thermal\,Noise} + Interference$$

Interference results from network traffic and from other cells. A good geometry factor which will produce higher speeds requires good cell isolation between the cells. There are no soft handovers in HSDPA and the cells operate on the same channel. Thus, neighbor cells are potential noise sources to the HSDPA user.

Traditionally, microcells are often deployed in high use areas in city centers. Where a macrocell does not sufficiently cover an intended area, a microcell is deployed to provide coverage to that area. Microcells deployed in high traffic urban areas typically provide good deep indoor coverage and boost capacity by a low frequency and scrambling code reuse factor. Each microcell antenna radiates a separate cell with typical inter-site distances of about 300-500 meters. However, standard deployment gives poor isolation between neighboring cells. Soft handover zones typically cover 30-40% of the area in a traditional microcell roll-out. These soft handover zones load the backhaul and impact the capacity of the network. Also, the SNR between neighboring HSDPA cells will degrade data throughput in overlapping areas. Other microcell difficulties include dropped calls, high power load on the UMTS, and a high production cost for the operator.

Another communication service protocol is Orthogonal Frequency-Division Multiple Access (OFDMA) which is a digital modulation scheme where multiple access is achieved by assigning subsets of subcarriers to individual users, allowing simultaneous low data rate transmission from several users. Other protocols which may be used include, but are not limited to, Worldwide Interoperability for Microwave Access (WiMAX) and Long Term Evolution (LTE). These protocols can be used with multiple-input multiple-output (MIMO) networks. In typical MIMO networks, multiple antennas are closely spaced to each other. However, consistent signal coverage is not achieved in a closely spaced MIMO network, resulting in more frequent soft handovers (except for WiMAX and LTE systems which do not have soft handovers), lower average data rate, lower battery quality, and lower voice quality.

United States Patent No. US6308085B1 entitled "Distributed Antenna System and Method of Controlling the Same" of Kabushiki Kaisha Toshiba describes a distributed antenna system comprising a plurality of antennas arranged in a distributed manner such that individual service areas partly overlap one another, and a centralized controller for controlling the plurality of antennas, wherein the centralized controller comprises a selection circuit for selecting at least one of the plurality of antennas and a beam forming circuit for forming at least one beam by setting desired excitation conditions for the at least one of the plurality of antennas selected.

SUMMARY

The invention is defined by the appended claims.

The details of various embodiments of the claimed invention are set forth in the accompanying drawings and the description below. Other features and advantages will become apparent from the description, the drawings, and the claims.

DRAWINGS

Figure 1 is a block diagram of one embodiment of a backfire distributed antenna system (DAS) with two remote units connected to a base station transceiver.

Figures 2A-2C are block diagrams showing configurations of embodiments of a backfire distributed antenna system around a building.

Figures 3A-3B are block diagrams showing configurations of embodiments of a backfire distributed antenna system along a curvilinear path.

Figures 4A-4B are block diagrams showing configurations of embodiments of a backfire distributed antenna system in a stadium.

Figure 5 is a graph of isolation between two distributed antennas mounted back-to-back.

Figure 6-7 are embodiments of methods for using simulcast in a distributed antenna system with a backfire configuration.

Figures 8A-8C are block diagrams of embodiments of a mobile device that has a rake receiver comprising three fingers within a coverage area of a backfire distributed antenna system.

Figure 9 is a block diagram of one embodiment of a mobile device.

Figure 10 is a block diagram of one embodiment of a backfire distributed antenna system using radiating cable.

Like reference numbers and designations in the various drawings indicate like elements.

DETAILED DESCRIPTION

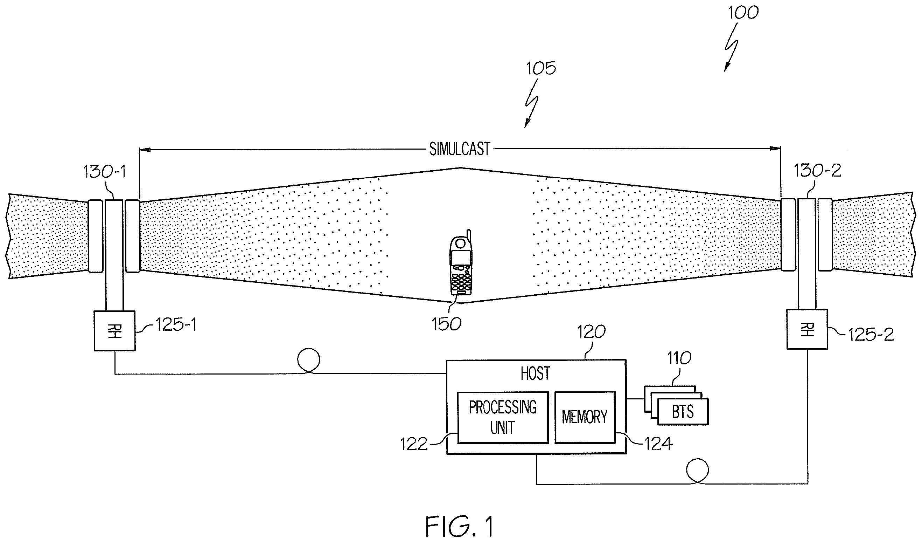

Figure 1 is a block diagram of one embodiment of a backfire distributed antenna system (DAS) 100 with two remote units 125 connected to a base transceiver station 110. A distributed antenna system is a network of spatially separated remote units communicatively coupled to a common source via a transport medium that provides wireless service within a geographic area or structure (also referred to herein as a cell or a coverage area). The transport medium can be coaxial cable or fiber optic connections, twisted pair, free space optics, cable, mmWave, radio frequency (RF) links, or the like. In a DAS, transmitted power is divided among several antennas in distributed locations so as to provide a large coverage area using less transmitted power than would be required by a single antenna.

The DAS system 100 comprises a host 120 which interfaces with a base transceiver station (BTS) 110. The BTS 110 is associated with one or more service providers that supply communication services for mobile subscribers. Communication services which use the BTS 110 can use protocols such as Wideband Code Division Multiple Access (WCDMA) or Orthogonal Frequency-Division Multiple Access (OFDMA). OFDMA is a digital modulation scheme where multiple access is achieved by assigning subsets of subcarriers to individual users, allowing simultaneous low data rate transmission from several users, or allowing aggregation of the subcarriers into high speed data rates for fewer users. Other protocols that the BTS 110 may provide include, but are not limited to, Worldwide Interoperability for Microwave Access (WiMAX) and Long Term Evolution (LTE). The host 120 is operable to carry signals from any protocol the BTS 110 provides.

The host 120 is in turn communicatively coupled (via coaxial cable, fiber optic connections, RF links, etc.) to one or more remote units 125-1 and 125-2 (referred to herein as remote units 125). The first remote unit 125-1 includes a first antenna 130-1 and the second remote unit 125-2 includes a second antenna 130-2 (referred to herein as antennas 130). A remote unit 125 houses an electronic and antenna system 130 used for wirelessly transmitting and receiving voice and/or data communications for subscribers of the service providers. One example of a remote unit is the radio head (RH) made by ADC Telecommunications, Inc. The Flexwave Prism made by ADC Telecommunications, Inc. may also be used. Distributed Antenna Systems are used with cellular systems to place remote units at the most desirable locations while keeping the baseband resources (such as the host 120) at a central location.

The DAS 100 can employ multiple-input, multiple-output (MIMO) techniques. A MIMO wireless network is a communication system with multiple antennas at both transmitter and receiver ends of a communication link. MIMO can be used with service provider technologies such as WCDMA, Evolved High Speed Packet Access (HSPA+), WiMAX, and LTE. There are various forms of MIMO that can be used, including Space Time Coding (STC) and Spatial Multiplexing (SM).

Space Time Coding is a technique used to transmit multiple copies of a data stream across a plurality of antennas and to exploit the various received versions of the data to improve reliability and reach. STC combines all the copies of the received signal in a way to maximize the Signal to Noise Ratio (SNR). One encoding method used in STC is the Alamouti method, which is a type of channel coding utilizing space-time block codes. STC does not require the signal strength from each antenna to be equal. However, if one signal is much weaker than the other (for example, by 10dB), diversity gain will not be realized. One signal will be much weaker than another in areas much further from the antenna with the weak signal than the other antenna, or if the signal is shadowed.

Spatial Multiplexing (SM) MIMO techniques involve splitting a signal into a plurality of signal streams wherein each of the plurality of signal streams is transmitted from a different transmit antenna in the same frequency band. SM doubles the bandwidth over the coverage area 105 but does not add to the range or signal gain of the coverage area 105. In regions where the coverage areas of the antennas 130 do not overlap, capacity will not be doubled. However, within the common coverage area the signals do not overlap close to one of the antennas. The signal strength is highest near one of the antennas where the capacity is already high due to the high SNR and the use of more efficient modulation. Spatial multiplexing occurs only in the overlap region because the signal strength from each antenna needs to be roughly equal. For a widely spaced backfire MIMO with two antennas, MIMO benefit is achieved using the same number of antennas as a single-input, single-output (SISO) network.

The host 120 comprises a processing unit 122 and a memory 124. The processing unit 122 is configured to transmit a signal to the remote units 125-1 and 125-2. The processing unit 122 may be located within or external to the host 120. The antennas 130-1 and 130-2 receive delayed signals due to the transmission time between the remote units 125-1 and 125-2 and the host 120, respectively. The processing unit 122 calculates the delay corresponding to the signal paths from the host unit 120 to each remote unit 125. Transmission of data from the host 120 to a remote unit 125 can be further delayed by the processor 122. Other means of delaying the transmission of data from the host 120 to a remote unit 125 includes lengthening the cable connecting the host 120 to the remote unit 125 (for example, by adding delay lines or spools of wire or fiber optic cable) or any other known method of adding delay to a signal.

The processing unit 122 can be implemented using software, firmware, hardware, or any appropriate combination thereof, as known to one of skill in the art. By way of example and not by way of limitation, the hardware components can include one or more microprocessors, memory elements, digital signal processing (DSP) elements, interface cards, and other standard components known in the art. Any of the foregoing may be supplemented by, or incorporated in, a speciallydesigned application-specific integrated circuit (ASIC) or a field programmable gate array (FPGA). In this exemplary embodiment, processing unit 122 includes or functions with software programs, firmware or computer readable instructions for carrying out various methods, process tasks, calculations, and control functions, used in delaying and transmitting data from a host to remote units. These instructions are typically tangibly embodied on any appropriate medium used for storage of computer readable instructions or data structures. In particular, in this embodiment, the instructions are stored on the memory 124.

The memory 124 can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

The DAS 100 uses simulcast to transmit the signals nearly simultaneously from both antennas 130. Simulcast is often used with DAS whereby the signal from a single base station 110 is replicated in multiple DAS systems to supply RF signal transceivers where they are needed for gap filling. However, when two multicast remote units 125 on the same frequency band are placed where their signals can overlap (that is, where the coverage area for each antenna 130 overlaps), multipath interference will occur. Multipath interference is especially problematic when the signals are at approximately the same power level. Large ripples can occur with deep nulls in the passband of the frequency band. OFDMA is well suited to handle these problems, however many of the OFDMA subcarriers may be attenuated beyond recovery and cause degradation in performance, which can be overcome by using the Alamouti STC method. With HSDPA systems, as discussed below, this problem is overcome by utilizing at least a chip delay to allow a rake receiver to resolve the multipath signals.

The geographic area which the antennas 130 transmit over is the coverage area 105. As shown in Figure 1, the antennas 130-1 and 130-2 are placed a distance apart and create the coverage area 105. In other embodiments, the antennas 130 are placed around the periphery of an area where coverage is desired (for example, around a building, in a stadium, along a residential street, along a railway, etc.). The coverage area 105 may be inside or outside a building. The DAS antennas 130-1 and 130-2 are configured to both transmit on the same frequency band. A wireless device 150 is shown within coverage area 105 which may be used by a mobile user (for example, a person using a phone or a laptop computer). The wireless device 150 is communicating with the DAS 100 with a rake receiver, which uses several subreceivers called fingers. Each finger decodes a multipath component of the received signal.

Typically in Distributed Antenna Systems, the signals have to be delayed such that the signals are transmitted by the antennas 130 nearly simultaneously. The signals for antennas closer to the host 120 (with respect to propagation delay) are delayed by an amount such that the signals reach those antennas at the same time as the signal reaches the furthest antenna. However, the signals may be transmitted more than a chip apart. A chip is a pulse of a direct-sequence spread spectrum (DSSS) code, the term for a segment of the modulated signal. In other words, a chip is a unit of transmission. If the signal delay is less than one chip, fading problems occur. However, if the signals are transmitted at least one chip apart, a rake receiver is capable of interpreting the delay. For example, in a two antenna system one finger of the rake receiver receives the undelayed signal and another finger receives the signal delayed by at least one chip. Because the signal is delayed by one chip, the rake receiver can disentangle the signal in the region of interference. Therefore, the rake receiver enables the DAS to use two or more copies of a signal stream if the time difference between the copies is more than one chip. In an OFDMA widely spaced MIMO backfire system, the signals do not have to be at least one chip apart. However, the signals could be variably delayed to equalize the time delay for the DAS, although a delay is not required. If a delay is used, the delay should be smaller than the OFDMA cyclic prefix (which repeats the end of a data symbol at the beginning of the data symbol).

The antennas 130 are widely spaced in a backfire configuration. In a backfire DAS configuration, the antennas point towards each other (that is, inward to the cell) instead of away from each other (away from the cell). Widely spaced transceivers are placed a greater distance apart (for example, at opposing sections of a coverage area) than typical MIMO systems which have transceivers closely spaced (that is, in the same section of a coverage area). In one embodiment of a widely spaced DAS configuration, the remote units are spaced from each other such that near each remote unit, signals from the other remote units are negligible. Having widely spaced transceivers allows the DAS to have a more consistent signal over a greater area. The backfire configuration results in an additional shadowing benefit. A wireless device 150 will have more coverage when being shadowed (for example, by a tree or wall) than with typical systems. Additionally, using MIMO with protocols such as LTE or WiMAX benefit from having a large low-correlation between the signals. Correlation between the signals is high when the antennas are closely spaced, resulting in poor MIMO performance.

For a DAS in a backfire configuration, the antennas in a pair of antennas are configured such that they are aimed at least partially towards each other. The antennas can aim directly towards each other (as shown in Figure 1) or be offset by an angle such that any part of the antennas' transmission areas overlap. Backfiring maintains the RF power between the DAS sources at a more constant level, and backfiring on the same frequency band saturates the cell. This single cell dominance results in a more consistent signal and reduces interference between the antennas. In a backfire configuration with multiple pairs of remote units, the cells of each remote unit pair are fairly isolated from each other. The Signal to Noise and Signal to Interference Ratios are reduced due to good cell isolation. This improves the geometry factor, G, which increases overall DAS performance. Particularly, HSDPA performance is increased, especially through increased data speed.

STC and SM are well suited for the DAS antenna nodes 130 being widely spaced and in a backfire configuration. When the wireless device 150 is located near the periphery of the cell 105 (such as near one of the antennas 130), the signals are unbalanced and space time coding and spatial multiplexing are not needed as the signal is strong and without interference. However at the boundary between the DAS nodes 130 (near the center of the cell 105), the signals are at approximately equal strength. STC was designed to accommodate this condition and interference is generally not a problem. Similarly, spatial multiplexing will also work well at the boundary region because the paths the signals take will be uncorrelated, a requirement for spatial multiplexing. Near one of the antennas 130, the wireless device 150 is not likely to receive signals from the other antenna 130. However, the wireless device 150 will have good signal quality due to being near one antenna.

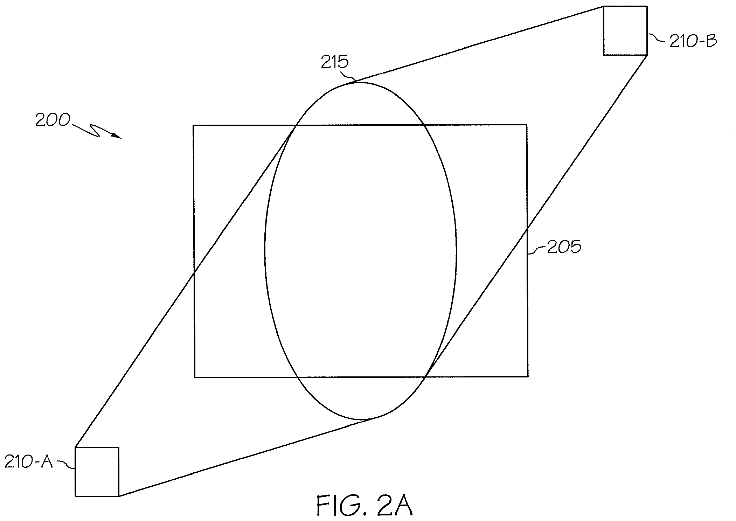

Figures 2A-2C are block diagrams showing configurations of embodiments of a backfire distributed antenna system around a building. Figure 2A is a block diagram of one embodiment of a backfire DAS 200 with two transceivers 210-A and 210-B. The DAS 200 covers the building 205. An overlap region 215 is shown where the coverage of the transceivers 210 overlap. The transceivers 210-A and 210-B are on the same frequency band. In one embodiment, the DAS 200 is transmitting HSDPA. The transceivers 210 are communicatively coupled to a host (not shown) which sends signals to the transceivers 210 such that the signals transmitted by the transceivers 210 are separated in time by at least one signal chip. In alternate embodiments, the DAS 200 is a 2x2 MIMO system using either STC or SM.

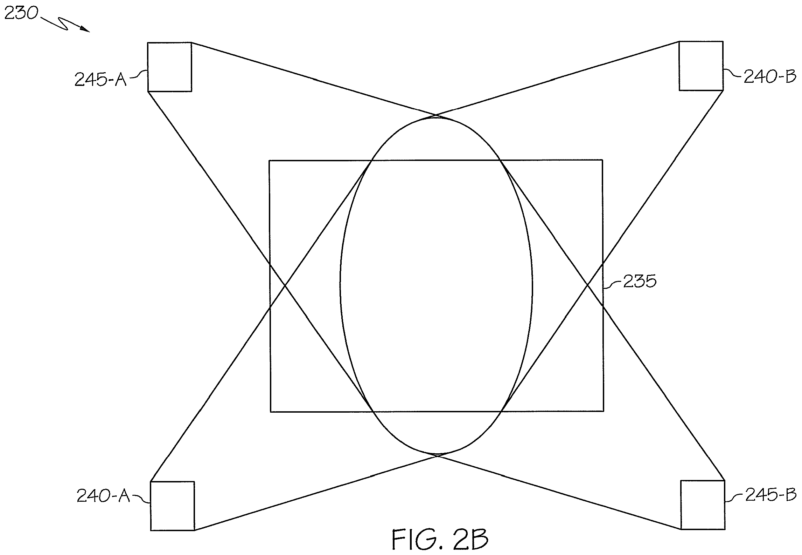

The techniques described above may be combined with separate frequency bands. For example, the DAS could have four transceivers, each paired with backfiring partners to create two channel cells that have high isolation from each other and low interference. Figure 2B is a block diagram of one embodiment of a backfire DAS 230 with four transceivers 240-A, 240-B, 245-A, and 245-B. Antennas 240-A and 240-B are on a first frequency band and are backfiring partners. Antennas 245-A and 245-B are on a second frequency band and are backfiring partners.

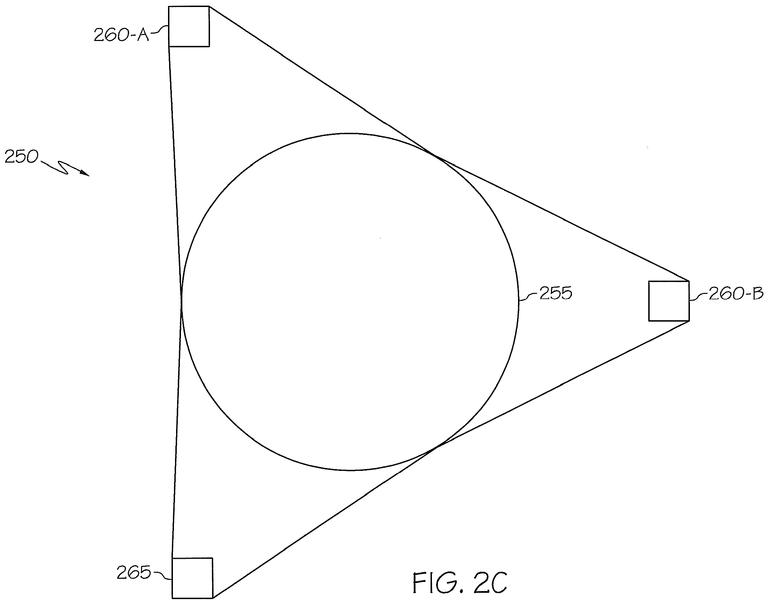

Alternative embodiments of a backfire DAS comprise a plurality of antennas, wherein at least one of the antennas is not paired. Figure 2C is a block diagram of one embodiment of a backfire distributed antenna system 250 with a pair of antennas, 260-A and 260-B, and an unpaired antenna 265. The antennas 260-A and 260-B are on a first frequency band and are backfiring partners. The third antenna 265 is also on the first frequency band and the signal radiated by the third antenna 265 is delayed at least one chip apart from the antennas 260-A and 260-B. Other embodiments of distributed antenna system have any suitable number of antennas, such as, for example, four unpaired antennas, four antennas two of which are paired, or five antennas. These embodiments provide an inward facing cell structure utilizing any number of inward facing antennas to improve the coverage of the edge of the cell area. This arrangement is especially suitable for LTE because the chance of signal loss decreases through improved data throughput and distribution of subcarriers between cells.

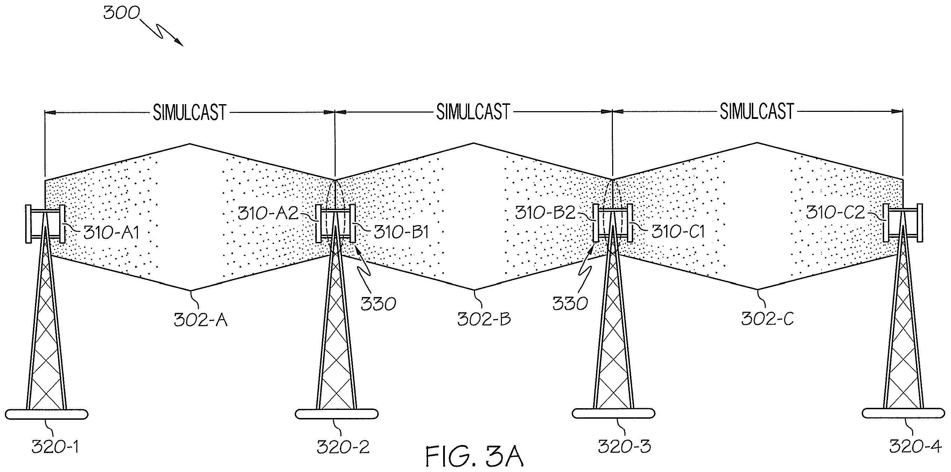

Figures 3A-3B are block diagrams showing configurations of embodiments of a backfire distributed antenna system along a curvilinear path. Figure 3A is a block diagram of one embodiment of a linear backfire DAS 300. The DAS 300 may be placed along a street, highway, railway, tunnel, or the like. Three cell regions are shown, 302-A, 302-B, and 302-C (referred to herein as cells 302). Transceivers 310 are mounted back-to-back on the antenna towers 320-1 through 320-4. The tower 320-1 supports the transceiver 310-A1. The tower 320-2 supports the transceivers 310-A2 and 310-B1, and so on. Transceivers 310-A1 and 310-A2 are in a backfire configuration and are backfiring partners, as well as 310-B1 and 310-B2, and 310-C1 and 310-C2.

The cells 302 are each on a separate frequency band. In one embodiment, only adjacent cells are on separate frequency bands (for example, cell 302-A and 302-C are using a first frequency band, and cell 302-B is using a second frequency band). In another embodiment, the cells 302 are all on the same frequency band. Using DAS deployment with back-to-back mounted sector antennas may bust the isolation between the cells 302-A, 302-B, and 302-C. However, there are still handover zones at the gridlines 330 (the boundaries between the cells), but these are in limited regions directly near the antennas. The gridlines 330 are between cells 302-A and 302-B, as well as between cells 302-B and 302-C. Throughout the coverage area, the signal is much more consistent in this configuration than with traditional cells. Thus, soft handovers occur less frequently, resulting in greater capacity throughout the cell. If a user is traveling through the DAS (for example, a passenger riding a railcar), the user's device will experience greater bandwidth and less power consumption, due to greater cell isolation and reduced handovers.

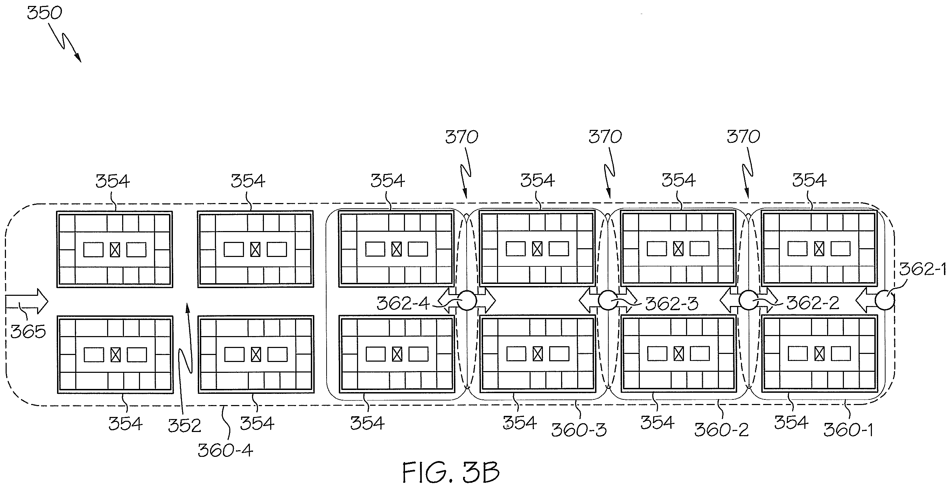

Figure 3B is a block diagram of one embodiment of a linear backfire DAS 350 along a street 352. Buildings 354 (such as offices and residences) and remote units 362-1 through 362-4 are located along the street 352. The remote units 362 are connected to a host (not shown) and comprise transceivers (not shown). The transceivers broadcast over coverage areas 360-1 through 360-4 in a backfire configuration (the arrows in Figure 3B depict the direction of beamforming of the transceivers). The gridlines 370 between cells 360 indicate areas of signal overlap between different cells 360.

The transceiver 365 is a macro antenna. A macro antenna is directly connected to a base transceiver station. The transceiver 365 may be operating on the same frequency band as remote unit 362-4. In other embodiments, the transceiver 365 is another remote unit in the Distributed Antenna System. The cells 360 may all be on the same frequency band or on different frequency bands.

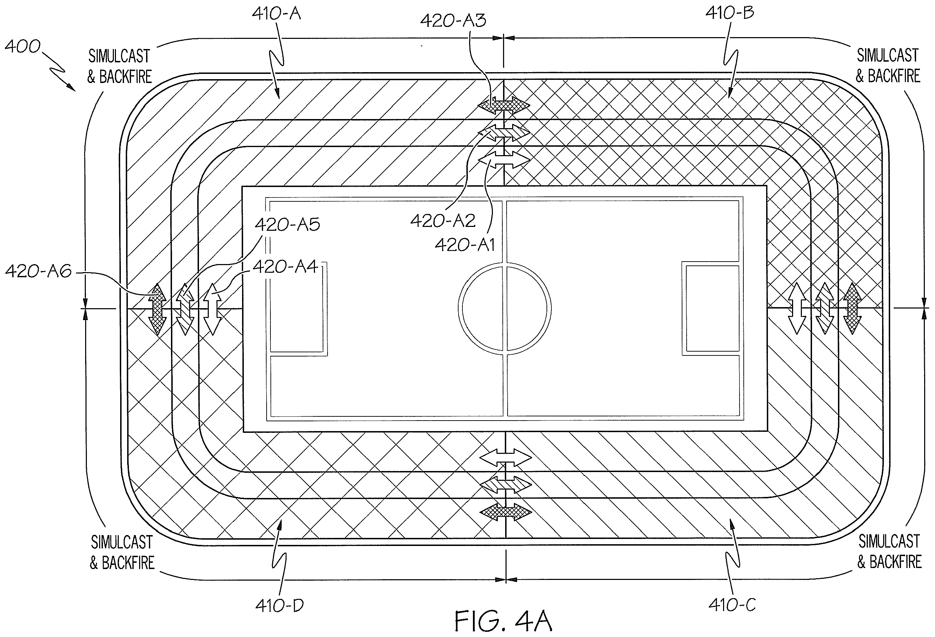

Figures 4A-4B are block diagrams showing configurations of embodiments of a backfire distributed antenna system in a stadium. Figure 4A shows a stadium 400 with four cells 410-A through 410-D on distinct frequency bands. The stadium 400 has levels 1 through 3, corresponding to lower, middle, and upper decks of the stadium 400. Each cell 410 has backfired antennas 420 corresponding to each level. For example, cell 410-A has antenna 420-A1 backfired with 420-A4 on level 1, antenna 420-A2 backfired with 420-A5 on level 2, and antenna 420-A3 backfired with 420-A6 on level 3. The antenna pairs are directed perpendicular to each other; however the antenna pairs create a common coverage area.

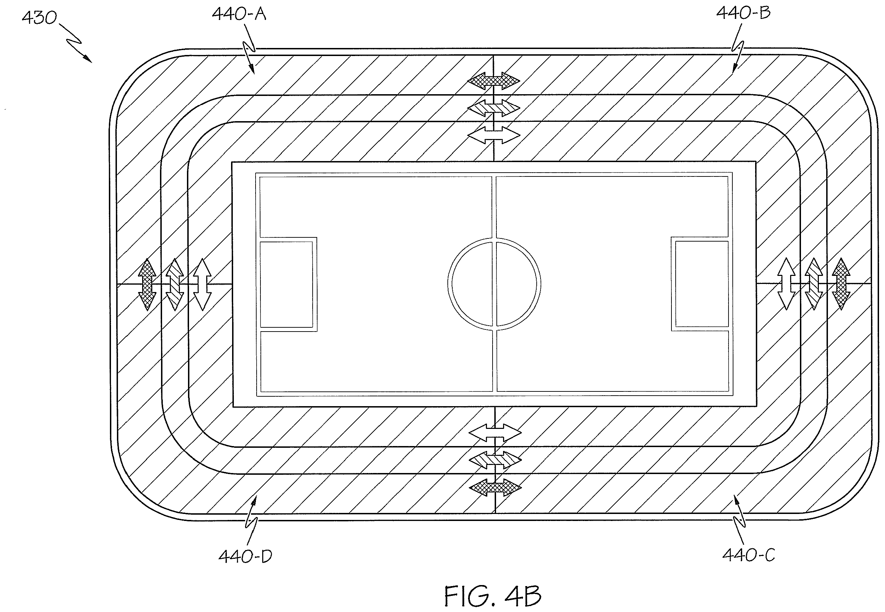

Figure 4B shows a stadium 430 with four cells 440-A through 440-D on the same frequency band. In other words, the same cell (frequency band) is simulcast by all the remote units in the DAS. This configuration results in the network having low capacity. Other cell configurations and frequency bands are contemplated.

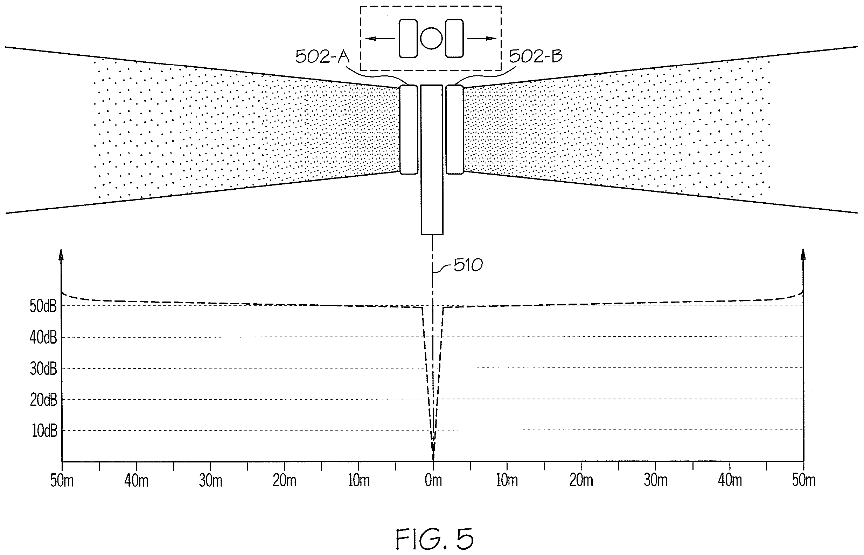

Figure 5 is a graph of isolation between two distributed antennas 502 mounted back-to-back. There is good isolation between the two cells except for along the gridline 510, corresponding to the area between the antennas 502-A and 502-B.

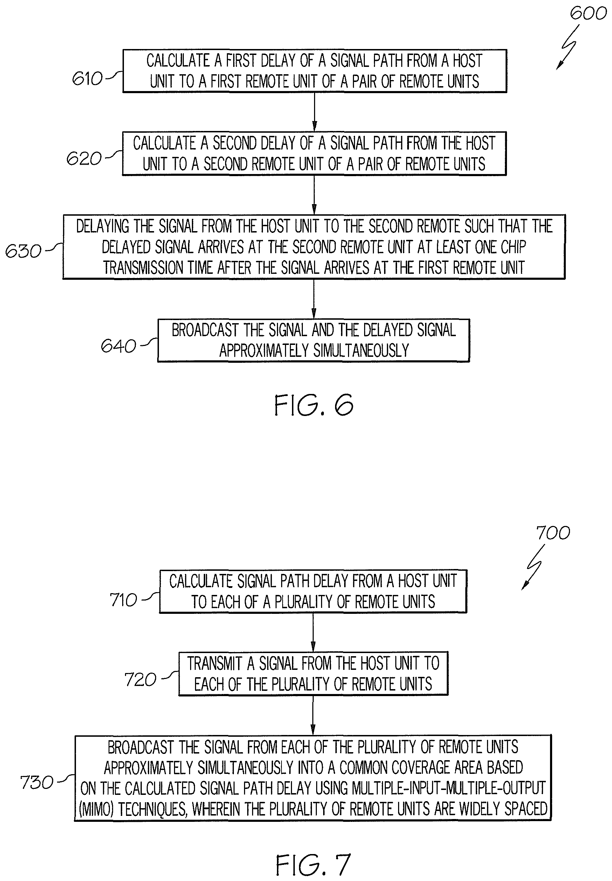

Figure 6 is one embodiment of a method 600 for using simulcast in a DAS with a backfire configuration. The signal delay from a base station to a first antenna of a pair of antennas is calculated (610). Also, the signal delay from a base station to a second antenna of a pair of antennas is calculated (620). The second antenna will usually be the antenna with the shorter signal path. The signal from the base station to the second antenna of the pair of antennas is delayed such that the second signal (the "delayed signal") reaches the second antenna at least one chip delay after the first signal (the "signal") reaches the first antenna (630). With the set delays, the signals are simulcast from the pair of antennas (640).

The method 600 can be implemented for any number of antenna pairs. The method 600 can also be implemented for any number of antennas regardless of pairing of the antennas. The method 600 can be used with HSDPA and HSPA+ in a MIMO system. Also, the method 600 can be used with OFDMA using MIMO techniques such as STC or SM.

Figure 7 is one embodiment of a method 700 for using simulcast in a DAS with a backfire configuration. The signal delay from the host unit to each of the plurality of remote units is calculated (710). A signal is transmitted from the host unit to each of the plurality of remote units (720). The signals are broadcasted from each of the plurality of remote units approximately simultaneously into a common coverage area based on the calculated signal path delays using MIMO techniques wherein the plurality of remote units is widely spaced (730). The method 700 can be implemented for any number of antennas or antenna pairs. The method 700 can be used with OFDMA using MIMO techniques such as STC or SM. When STC is used, the Alamouti method of channel coding using space-time block codes to transmit a copy of the signal to each remote unit can be used.

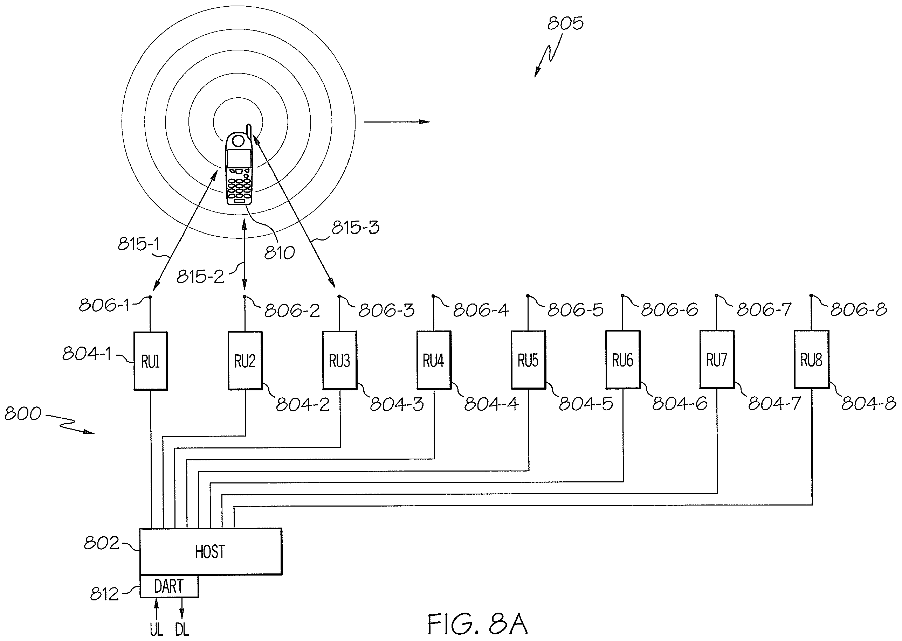

Figures 8A-8C are block diagrams of embodiments of a mobile device that has a rake receiver comprising three fingers within a coverage area of a backfire distributed antenna system. Figure 8A depicts one embodiment of a mobile unit 810 within a coverage area 805 of a distributed antenna system 800. The DAS 800 can be an LTE system, a HSDPA system, or any other suitable distributed antenna system. The DAS 800 comprises a host 802 and eight remote units, 804-1 through 804-8 (collectively referred to herein as remote units 804). Each remote unit 804-1 through 804-8 has a corresponding antenna, 806-1 through 806-8, respectively (collectively referred to herein as antennas 806). The host 802 distributes a signal to each of the remote units 804, wherein each transceiver 806 transmits the signal at a time different from the transmission of the signal from each of the other antennas 804 by a least one chip. In other words, there is a delay of at least one chip between each signal transmitted by antennas 806.

Embodiments of the host unit 802 and the remote units 804 have a modular design and defined interfaces that allow components to be removed and installed to adapt to the needs of the service providers, as discussed in U.S. Patent Application Serial No. 11/627,251 and incorporated herein by reference. Both host 802 and remote units 804 are designed around a serial radio frequency (SeRF) communicator and have a defined interface where different varieties of digital to analog radio frequency transceiver (DART) modules can be connected and disconnected. Shown in Figure 8A, the host 802 comprises a DART module 812. There are many different embodiments of the DART module 812, and each DART module 812 is designed for a particular technology and frequency band. Thus, technology and frequency band adjustments can be made by simply replacing the DART module 812 in the host unit 802 or remote unit 804.

The mobile unit 810 comprises a rake receiver with three fingers, 815-1 through 815-3 (collectively referred to herein as fingers 815). Each finger 815 resolves a signal from one of the antennas 806. As depicted in Figure 8A, finger 815-1 receives the signal from antenna 806-1, finger 815-2 receives the signal from antenna 806-2, and finger 815-3 receives the signal from antenna 806-3. Because each of the signals is delayed by at least one chip from each other, the mobile unit 810 can resolve the signals. The antennas 806 simulcast the signals into the coverage area 805.

As the mobile unit 810 moves through the coverage area 805, only three remote units 804 will be visible at any point. This is because the number of fingers 815 available in the rake receiver of the mobile unit 810 determines the number of signals the mobile unit 810 can differentiate between. In other words, the limiting factor of the number of replicas of the signal that can be received is the number of fingers of the rake receiver.

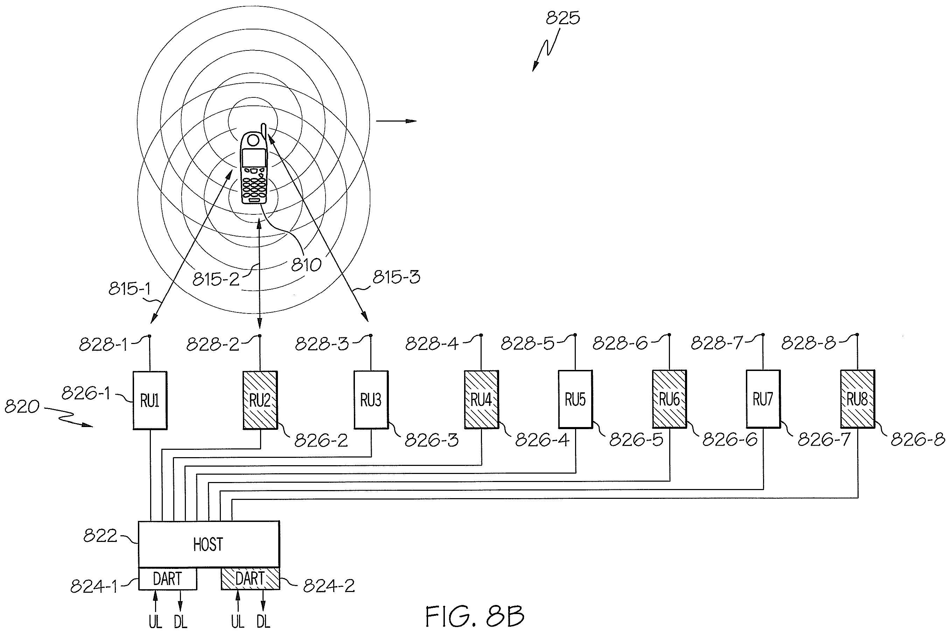

Figure 8B depicts one embodiment of a mobile unit 810 within a coverage area 825 of a distributed antenna system 820 employing a two by two MIMO configuration. The mobile unit 810 comprises two transmitters and a rake receiver with at least three fingers, 815-1 through 815-3. A host 822 comprises two DART modules 824-1 and 824-2 that each are configured to send signals through the host 822 on the same frequency band. Remote units 826-1 through 826-8 are coupled to the host 822 and receive signals from the host 822. The host 822 sends the signal from the DART module 824-1 to remote units 826-1, 826-3, 826-5, and 826-7 and the signal from the DART module 824-2 to remote units 826-2, 826-4, 826-5, and 826-8.

The remote units 826-1 through 826-8 (referred to herein collectively as remote units 826) each comprise an antenna 828-1 through 828-8 (referred to herein collectively as antennas 828), respectively. The signals received at each remote unit 826 have a timing offset (that is, a delay) from the signals received at the other remote units 826. The antennas 828 simultaneously transmit the signals into the coverage area 825. As the mobile unit 810 moves through the coverage area 825, it receives two versions of the signal from one of the DART modules 824-1 or 824-2 and one signal from the other DART module 824-1 or 824-2. For the signal received twice, certain embodiments of the mobile unit 810 will not be able to use both versions of the same signal, and hence only one of the signals will be used (for example, the stronger signal).

Embodiments of the signals received at the remote units 826 are delayed from one another. In one embodiment, the signals to be transmitted from the remote units 826-1, 826-3, 826-5, and 826-7 are offset from each other in time by at least one chip. The signals to be transmitted from the remote units 826-2, 826-4, 826-5, and 826-8 are also offset from each other in time by at least one chip. However, the signals to be transmitted from, for example, remote unit 826-1 and remote unit 826-2 are not offset from one another because they are different signals. The mobile unit 810 is able to resolve those two signals without requiring a timing offset between them. The signals are all delayed (either digitally or using analog methods) such that the signals can be simulcast from their respective remote units 826.

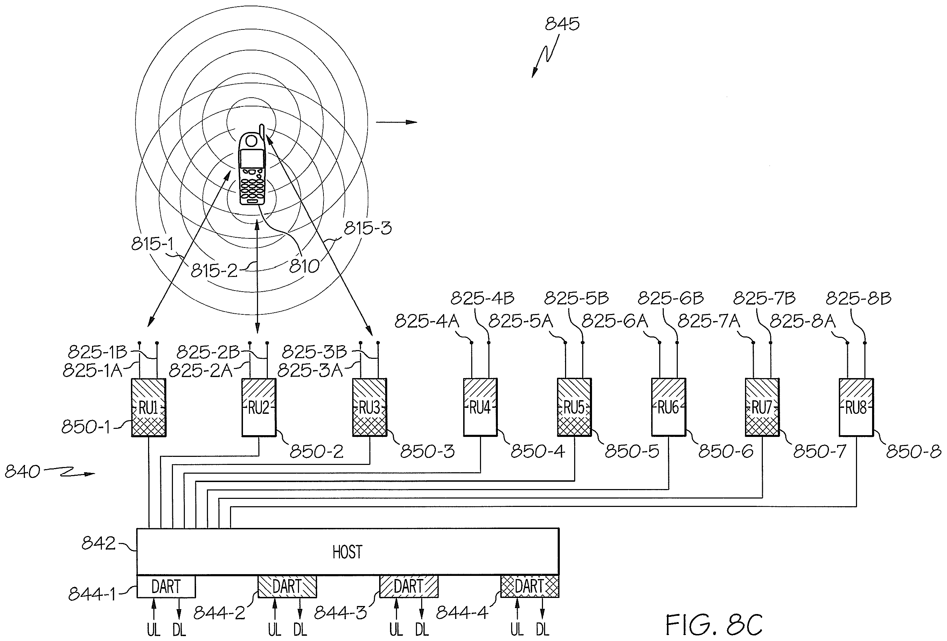

Figure 8C depicts one embodiment of a mobile unit 810 within a coverage area 845 of a distributed antenna system 840 employing a two by four MIMO configuration. The MIMO configuration is composed of four different signals leaving a host 842 (for example, received from a base station), and two different signals leaving the mobile unit 810. In this embodiment, the host 842 comprises four DART modules 844-1 through 844-4 that each provides a signal to the host 842. Remote units 850-1 through 850-8 (referred to collectively as remote units 850) are coupled to the host 842 and each comprise two antennas 852-1A and 852-1B through 852-8A and 852-8B, respectively. One embodiment of the antennas, for example 852-1A and 852-1B, are set apart in space such that they function as MIMO antennas and have polarization diversity between them. A timing offset exists between each of the remote units 850, created either through digital delay methods, analog delay methods, or a combination of both types of methods.

Each remote unit 850 receives two of the signals. For example, remote unit 850-1 receives signals from DART modules 844-1 and 844-2, and remote unit 850-2 receives signals from DART modules 844-3 and 844-4. Thus, each remote unit 850 transmits two different information streams on the same channel without any inherent difference in delay. However, the signals between different remote units 850 are offset from each other in the manner described above with respect to Figure 8B and are simulcast from the antennas 852.

The mobile unit 810 receives as many signals as its rake receiver supports fingers 815. As depicted in Figure 8C, the mobile unit 810 receives six different signals while it is within the coverage area 845. In other words, the mobile unit 810 receives four different MIMO signals, with two offset by significant distance and the other two offset by phase difference in the individual remote unit 850, and one set of those signals will be repeated from another remote unit 850 transmitting the same set of signals. Furthermore, because the signal path for finger 815-1 is different from 815-3, the mobile unit 810 will be able to resolve those signals when they are repeated. The mobile unit 810 resolves the signal through the polarization diversity of the signals radiated by the two antennas on each remote unit (such as antennas 852-1A and 852-1B on remote unit 850-1) and through physical spacing between two remote units that are transmitting the same signal (such as between remote unit 850-1 and remote unit 850-3).

In other embodiments of the DAS 840, adjacent remote units 850 receive the same set of signals. In one embodiment, each of the signals from the DART modules 844-1 thought 844-4 is transmitted over different frequency bands.

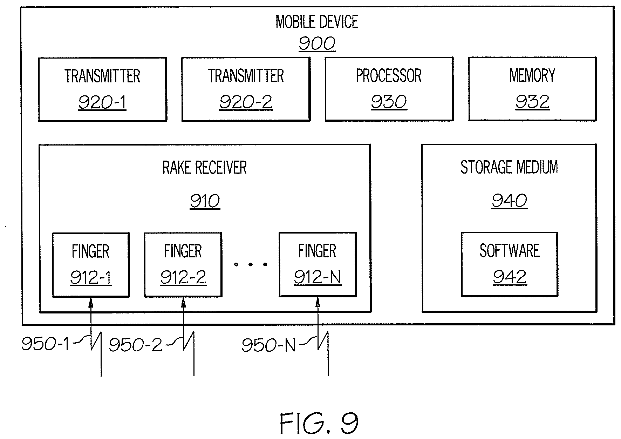

Figure 9 is a block diagram of one embodiment of a mobile device 900. The mobile device 900 comprises a rake receiver 910, at least two transmitters 920-1 and 920-2, a processor 930, a memory 932, and a storage medium 240. The rake receiver 910 comprises a plurality of fingers, 912-1 through 912-N (referred to herein collectively as fingers 912). The fingers 912 receive different signals, such as the MIMO signals described above with respect to Figure 8C, and the mobile device 900 is able to resolve the signals through polarization diversity, spacing, and timing offsets. Software 942 comprises programmable instructions executable by the processor 930 which enable the mobile device 900 to resolve signals received by the fingers of the rake receiver 910. The at least two transmitters 920-1 and 920-2 enable the mobile unit 900 to downlink two sets of signals (for example, in the two by two MIMO configuration of Figure 8B and the two by four MIMO configuration of Figure 8C).

The rake receiver 901 receives a number of signals or sets of signals 950-1 through 950-N (referred to herein collectively as signals 950) equal to its number of fingers 912. The rake receiver 910 is able to resolve or combine these signals 950 into one or more coherent signals that can be used by other components of the mobile device 900 (for example, an audio signal could be resolved from the signals 950 and output to a user via a speaker). For example, the signals 950 could correspond to the signals received by the fingers 815 in Figures 8B and 8C.

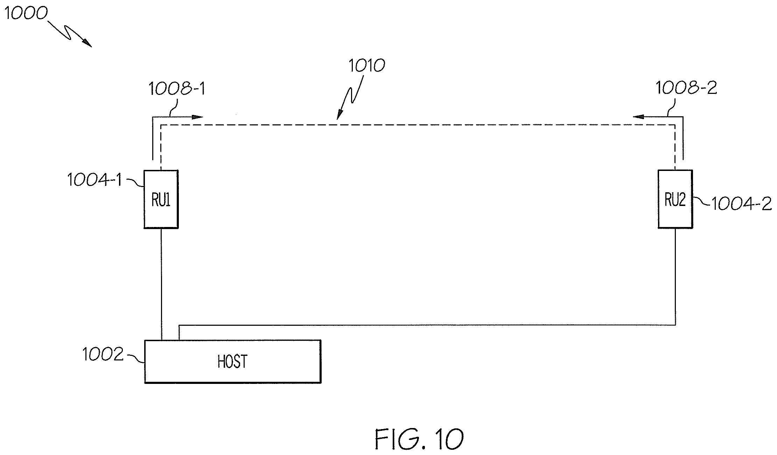

The concepts described above can also be applied to distributed antenna systems utilizing radiating cable. Figure 10 is a block diagram of one embodiment of a backfire distributed antenna system 1000 using radiating cable 1010. A host 1002 is communicatively coupled to a remote unit 1004-1 and a remote unit 1004-2. A signal is distributed to the remote unit 1004-1 and to the remote unit 1004-2. The signal received at the remote unit 1004-2 is delayed compared with a signal received at the remote unit 1004-1. The delay is achieved through either by a digital delay or an analog delay (for example, by adding additional length to the wiring connecting the host 1002 and the remote unit 1004-2).

A radiating cable 1010 has a first end coupled to the remote unit 1004-1 and a second end coupled to the remote unit 1004-2. The radiating cable 1010 comprises cabling that emits and receives electromagnetic radiation, typically at high frequency. One embodiment of the radiation cable 1010 comprises coaxial cable and uses a frequency range of approximately 3 to 30 MHz. However, other frequencies and cabling may be used, such as for example, 700-2600 MHz.

The signal from remote unit 1004-1 is sent along the forward path (represented by an arrow 1008-1) of the radiating cable 1010. The delayed signal from remote unit 1004-2 is sent along the reverse path (represented by an arrow 1008-2) of the radiating cable 1010. In other words, the same signal is simulcast on the radiating cable 1010 twice, one on the forward path 1008-1 and the other on the reverse path 1008-2, with a timing offset between the two instances of the signal. A rake receiver in proximity to the RC will receive both the forward 1008-1 and reverse path 1008-2.

The timing offset between the signal on the forward path 1008-1 (referred to herein as the forward signal) and the signal on the reverse path 1008-2 (referred to herein as the reverse signal) is at least one chip delay. This enables a rake receiver within the coverage area of the radiating cable to resolve both the forward signal and the reverse signal. In some embodiments, the timing offset between the forward signal and the reverse signal is greater than the time it takes the forward signal and reverse signal to reach their respective opposite end of the radiating cable 1010. A radiating cable will typically have areas along its length where the signal is faded (referred to as a fading dip). Sending a signal on the forward path and the reverse path of the radiating cable 1010 reduces the potential of dips forming in the signal. Because there are two signals, one delayed feed from each end of the radiating cable 1010, it is less likely that both signals will fade at the same time. A mobile unit within the coverage area of the radiating cable 1010 will be able to select the strongest signal path.

Embodiments of the DAS system 1000 install the radiating cable 1010 along an area that is more conducive to a radiating cable than antenna towers. For example, the radiating cable 1000 is installed along a tunnel (along, for example, a mass transit rail line or a highway tunnel), in a building (for example, along a hallway), or any other suitable location.

MIMO systems can also be used with radiating cable 1010. In such an embodiment, for example, two or more radiating cables are laid proximate to each other and define a common coverage area. Each of the radiating cables receives a different signal than the other radiating cables. The different signals may be, for example, a multiplexed version of a single signal. Other embodiments of the DAS 1000 comprise line amplifiers spaced at predetermined intervals along the radiating cable 1010 in order to boost the signals.

Several means are available to implement the systems and methods of the current invention as discussed in this specification. In addition to any means discussed above, for example, for processor 930, these means include, but are not limited to, digital computer systems, microprocessors, programmable controllers and field programmable gate arrays (FPGAs). Therefore other embodiments of the present invention are program instructions resident on computer readable media, such as storage medium 940, which when implemented by such controllers, enable the controllers to implement embodiments of the present invention. Computer readable media are physical devices which include any form of computer memory, including but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device. Program instructions include, but are not limited to computer-executable instructions executed by computer system processors and hardware description languages such as Very High Speed Integrated Circuit (VHSIC) Hardware Description Language (VHDL).

Distributed Antenna Systems in a backfire configuration provide increases in data speed for HSDPA and HSPA+. Greater isolation between cells is attained with less soft handovers occurring than with typical wireless systems because the signal throughout a cell is more consistent. Greater building penetration is achieved as well. The limited soft handover zones results in more capacity per cell. Shadowing effects are minimized. The remote units can be placed in any configuration, such as, but not limited to, approximately curvilinear, rectangular, square, diamond, hexagonal, toroidal, and circular. DAS widely spaced backfire MIMO with STC or SM increases network performance, providing higher average data rates, better voice quality, longer battery life, and fewer soft handovers between cells.

## Claims

1. A distributed antenna system, DAS (100), comprising:

   a host unit (120); and
   a plurality of remote units, wherein the plurality of remote units are paired to form a backfire configuration comprising multiple pairs of remote units, wherein a pair of remote units (125) are placed to define a coverage area (105) and each remote unit in a pair of remote units (125):

   is configured to be communicatively coupled to the host unit (120); and to point at least partially towards the remote unit to which it is paired in the backfire configuration, wherein each remote unit is spaced from the other unpaired remote units of the plurality of remote units such that near each remote unit, signals from the other unpaired remote units are negligible and RF power of the signals emitted from the remote units is at a more constant level, wherein the coverage area of each pair of remote units is fairly isolated from the coverage area formed by other pairs of remote units in the plurality of pairs of remote units; and
   is configured to simulcast data from the host unit (120) on the same frequency band as the remote unit to which it is paired.

2. The system of claim 1, wherein configured to simulcast data from the host unit (120) further comprises at least a first remote unit configured to simulcast on the same frequency band as a second remote unit.

3. The system of claim 1, wherein configured to simulcast data from the host unit (120) further comprises wherein each of the plurality of remote units is configured to receive the data with a timing offset different from the data received by each other of the plurality of remote units; and
wherein the timing offset between the data received by each remote unit is at least one chip apart from the data received by every other remote unit.

4. The system of claim 3, wherein the timing offset is achieved by one of a digital delay, an analog delay, or combinations thereof.

5. The system of claim 1, wherein the host unit (120) further comprises:

a processing unit (122) operable to:

calculate a first delay of a signal path from the host unit (120) to a first remote unit of the plurality of remote units; calculate a second delay of a signal path from the host unit (120) to a second remote unit of the plurality of remote units; delay the signal from the host unit (120) to the second remote unit such that the delayed signal from the host unit (120) arrives at the second remote unit at least one chip transmission time after the signal from the host unit (120) arrives at the first remote unit; and broadcast the signal and the delayed signal approximately simultaneously; and

a memory coupled to the processing unit.

6. The system of claim 5, wherein the timing of the delayed signal is sufficient such that a rake receiver in a mobile unit can resolve the signal and the delayed signal.

7. The system of claim 1, wherein the plurality of remote units operate on the same frequency band.

8. The system of claim 1, wherein the DAS is providing high-speed downlink packet access, HSDPA, to the coverage area (105).

9. The system of claim 1, wherein the DAS (100) is configured to use one of space time coding, STC, and spatial multiplexing, SM.

10. The system of claim 1, wherein each remote unit in the pair of remote units (125) is spaced from the remote unit to which it is paired such that near each remote unit in the pair of remote units (125), a signal from the remote unit to which it is paired is negligible.

11. The system of claim 10, wherein each remote unit is configured to simulcast data from the host unit (120) on the same frequency band as the remote unit to which it is paired.

12. The system of claim 1, wherein the host unit (120) further comprises:
a network interface to communicatively couple with a base station transceiver.

13. The system of claim 1, wherein the plurality of remote units are communicatively coupled to the host unit (120) using a transport medium selected from the group consisting of coaxial cable, fiber optic connections, twisted pair, free space optics, cable, mm Wave, and radio frequency, RF, links.

14. The system of claim 1, wherein the plurality of remote units:

are widely spaced from each other; and are paired to use multiple-input, multiple-output, MIMO, techniques.

15. The system of claim 14, wherein the host unit (120) is configured to distribute orthogonal frequency division multiple access, OFDMA, signals.

16. The system of claim 1, further comprising:
a radiating cable (1010), wherein:

a first end of the radiating cable (1010) is coupled to a first remote unit and a second end of the radiating cable (1010) is coupled to a second remote unit; the first remote unit sends the data signal on a forward path of the radiating cable; and the second remote unit sends a delayed data signal on a reverse path of the radiating cable, wherein the delayed data signal is the data signal with a timing offset.

17. The system of claim 16, further comprising:

a second radiating cable; and wherein the radiating cable is arranged to radiate a first component of a spatially multiplexed data signal and the second radiating cable is arranged to radiate a second component of the spatial multiplexed data signal.

18. The system of claim 1, further comprising:

a mobile device, comprising:
at least one transmitter; and a rake receiver, wherein the rake receiver comprises a plurality of fingers, wherein the plurality of fingers resolves a first data signal from a second data signal, wherein it is arranged that the first and second data signals are received within the coverage area (105).

19. The system of claim 1, further comprising:
a plurality of digital to analog radio frequency transceiver, DART, modules coupled to the host unit (120), wherein each DART module is configured to provide a signal to the host unit (120) on a distinct channel.

20. The system of claim 1, further comprising:

wherein each of the plurality of remote units comprises at least one antenna; a first set of the plurality of remote units is configured to receive a first data signal; and

a second set of the plurality of remote units is configured to receive a second data signal; wherein it is arranged that the first and second data signals are broadcast approximately simultaneously from the at least one antenna of each of the plurality of remote units.

21. A method for transmitting signals in a coverage area, the method comprising:

calculating signal path delay from a host unit (120) to each of a plurality of remote units, wherein the plurality of remote units are paired to form a backfire configuration comprising multiple pairs of remote units; transmitting a signal from the host unit (120) to each of the plurality of remote units; and broadcasting the signal from each of the plurality of remote units approximately simultaneously into one or more coverage areas (105) based on the calculated signal path delays using multiple-input-multiple-output, MIMO, techniques, wherein a pair of remote units (125) is placed to define a coverage area (105) in the one or more coverage areas (105), wherein each remote unit (125) in the pair of remote units points at least partially towards the remote unit to which it is paired in a backfire configuration, wherein the plurality of unpaired remote units are widely spaced from each other such that near each remote unit in the plurality of remote units, signals from other remote units in the plurality of unpaired remote units are negligible and the coverage area (105) of each pair of remote units is fairly isolated from the coverage area formed by other pairs of remote units in the plurality of pairs of remote units coupled to the host unit (120), wherein RF power of signals emitted by the remote units is at a more constant level.

**Patentansprüche**

1. Verteiltes Antennensystem (distributed antenna system - DAS) (100), das Folgendes umfasst:

eine Hosteinheit (120); und mehrere entfernte Einheiten, wobei die mehreren entfernten Einheiten gepaart sind, um eine Rückstrahlkonfiguration auszubilden, die mehrere Paare entfernter Einheiten umfasst, wobei ein Paar entfernter Einheiten (125) platziert ist, um einen Abdeckungsbereich (105) zu definieren und jede entfernte Einheit in einem Paar entfernter Einheiten (125):

konfiguriert ist, um mit der Hosteinheit (120) kommunikativ gekoppelt zu werden; und wenigstens teilweise in Richtung der entfernten Einheit zeigt, mit der sie in der Rückstrahlkonfiguration gepaart ist, wobei jede entfernte Einheit von den anderen ungepaarten entfernten Einheiten der mehreren entfernten Einheiten derart beabstandet ist, dass in der Nähe jeder entfernten Einheit Signale von den anderen ungepaarten entfernten Einheiten vernachlässigbar sind und die HF-Leistung der Signale, die von den entfernten Einheiten emittiert werden, auf einem konstanteren Pegel liegt, wobei der Abdeckungsbereich jedes Paars entfernter Einheiten ziemlich von dem Abdeckungsbereich isoliert ist, der durch andere Paare entfernter Einheiten in den mehreren Paaren entfernter Einheiten ausgebildet wird; und konfiguriert ist, um Daten von der Hosteinheit (120) auf demselben Frequenzband wie die entfernte Einheit, mit der sie gepaart sind, gleichzeitig zu übertragen.

2. System nach Anspruch 1, wobei es konfiguriert ist, um Daten von der Hosteinheit (120) gleichzeitig zu übertragen, ferner wenigstens eine erste entfernte Einheit umfasst, die konfiguriert ist, um auf demselben Frequenzband wie eine zweite entfernte Einheit gleichzeitig zu übertragen.

3. System nach Anspruch 1, wobei es konfiguriert ist, um Daten von der Hosteinheit (120) gleichzeitig zu übertragen, ferner umfasst, dass jede der mehreren entfernten Einheiten konfiguriert ist, um die Daten mit einem Zeitversatz zu empfangen, die sich von den Daten unterscheiden, die voneinander von den mehreren entfernten Einheiten empfangen werden; und wobei der Zeitversatz zwischen den Daten, die durch jede entfernte Einheit empfangen werden, wenigstens einen Chip von den Daten entfernt ist, die durch jede andere entfernte Einheit empfangen werden.

4. System nach Anspruch 3, wobei der Zeitversatz durch eine digitale Verzögerung, eine analoge Verzögerung oder Kombinationen davon erreicht wird.

5. System nach Anspruch 1, wobei die Hosteinheit (120) ferner Folgendes umfasst:

eine Verarbeitungseinheit (122), die für Folgendes betriebsfähig ist:

Berechnen einer ersten Verzögerung eines Signalpfads von der Hosteinheit (120) zu einer ersten entfernten Einheit der mehreren entfernten Einheiten; Berechnen einer zweiten Verzögerung eines Signalpfads von der Hosteinheit (120) zu einer zweiten entfernten Einheit der mehreren entfernten Einheiten;

derartiges Verzögern des Signals von der Hosteinheit (120) zu der zweiten entfernten Einheit, dass das verzögerte Signal von der Hosteinheit (120) bei der zweiten entfernten Einheit wenigstens eine hip-Übertragungszeit später ankommt, als das Signal von der Hosteinheit (120) an der ersten entfernten Einheit ankommt; und

Rundsenden des Signals und des verzögerten Signals ungefähr gleichzeitig; und

einen Speicher, der mit der Verarbeitungseinheit gekoppelt ist.

6. System nach Anspruch 5, wobei die Zeiteinstellung des verzögerten Signals derart ausreichend ist, dass ein Rake-Empfänger in einer mobilen Einheit das Signal und das verzögerte Signal auflösen kann.

7. System nach Anspruch 1, wobei die mehreren entfernten Einheiten auf demselben Frequenzband betrieben werden.

8. System nach Anspruch 1, wobei das DAS dem Abdeckungsbereich (105) einen Hochgeschwindigkeits-Downlink-Paketzugriff (high-speed downlink packet access - HSDPA) bereitstellt.

9. System nach Anspruch 1, wobei das DAS (100) konfiguriert ist, um Raum-Zeit-Codierung (space time coding - STC) oder räumliches Multiplexen (spatial multiplexing - SM) zu verwenden.

10. System nach Anspruch 1, wobei jede entfernte Einheit in dem Paar entfernter Einheiten (125) von der entfernten Einheit, mit der sie gepaart ist, derart beabstandet ist, dass in der Nähe jeder entfernten Einheit in dem Paar entfernter Einheiten (125) ein Signal von der entfernten Einheit, mit der sie gepaart ist, vernachlässigbar ist.

11. System nach Anspruch 10, wobei jede entfernte Einheit konfiguriert ist, um Daten von der Hosteinheit (120) auf demselben Frequenzband wie die entfernte Einheit, mit der sie gepaart ist, gleichzeitig zu übertragen.

12. System nach Anspruch 1, wobei die Hosteinheit (120) ferner Folgendes umfasst:
eine Netzwerkschnittstelle, um sich mit einem Basisstationssendeempfänger kommunikativ zu koppeln.

13. System nach Anspruch 1, wobei die mehreren entfernten Einheiten mit der Hosteinheit (120) unter Verwendung eines Transportmediums kommunikativ gekoppelt sind, das aus der Gruppe ausgewählt ist, die aus Koaxialkabel, Faseroptikverbindungen, verdrillter Zweidrahtleitung, optischem Richtfunk, Kabel, mm Welle und Hochfrequenz(HF)-Verbindungen besteht.

14. System nach Anspruch 1, wobei die mehreren entfernten Einheiten:

weit voneinander beabstandet sind; und
gepaart sind, um Multiple-Input, Multiple-Output(MIMO)-Techniken zu verwenden.

15. System nach Anspruch 14, wobei die Hosteinheit (120) konfiguriert ist, um orthogonale Frequenzmultiplexzugriffs(orthogonal frequency division multiple access - OFDMA)-Signale zu verteilen.

16. System nach Anspruch 1, das ferner Folgendes umfasst:
ein abstrahlendes Kabel (1010), wobei:

ein erstes Ende des abstrahlenden Kabels (1010) mit einer ersten entfernten Einheit gekoppelt ist und ein zweites Ende des abstrahlenden Kabels (1010) mit einer zweiten entfernten Einheit gekoppelt ist;
die erste entfernte Einheit das Datensignal auf einem Vorwärtspfad des abstrahlenden Kabels sendet; und
die zweite entfernte Einheit ein verzögertes Datensignal auf einem Rückwärtspfad des abstrahlenden Kabels sendet, wobei das verzögerte Datensignal das Datensignal mit einem Zeitversatz ist.

17. System nach Anspruch 16, das ferner Folgendes umfasst:

ein zweites abstrahlendes Kabel; und
wobei das abstrahlende Kabel angeordnet ist, um eine erste Komponente eines räumlich gemultiplexten Datensignals abzustrahlen, und das zweite Strahlungskabel angeordnet ist, um eine zweite Komponente des räumlich gemultiplexten Datensignals abzustrahlen.

18. System nach Anspruch 1, das ferner Folgendes umfasst:
eine Mobilvorrichtung, die Folgendes umfasst:

wenigstens eine Übertragungseinrichtung; und
einen Rake-Empfänger, wobei der Rake-Empfänger mehrere Finger umfasst, wobei die mehreren Finger ein erstes Datensignal aus einem zweiten Datensignal auflösen, wobei es angeordnet ist, dass das erste und das zweite Datensignal innerhalb des Abdeckungsbereichs (105) empfangen werden.

19. System nach Anspruch 1, das ferner Folgendes umfasst:
mehrere Digital-Analog-Hochfrequenz-Sendeempfänger (digital to analog radio frequency transceiver - DART)-Module, die mit der Hosteinheit (120) gekoppelt sind, wobei jedes DART-Modul konfiguriert ist, um der Hosteinheit (120) auf einem eindeutigen Kanal ein Signal bereitzustellen.

20. System nach Anspruch 1, das ferner Folgendes umfasst:

wobei jede der mehreren entfernten Einheiten wenigstens eine Antenne umfasst;
ein erster Satz der mehreren entfernten Einheiten konfiguriert ist, um ein erstes Datensignal zu empfangen; und
ein zweiter Satz der mehreren entfernten Einheiten konfiguriert ist, um ein zweites Datensignal zu empfangen;
wobei es angeordnet ist, dass das erste und das zweite Datensignal ungefähr gleichzeitig von der wenigstens einen Antenne jeder der mehreren entfernten Einheiten rundgesendet werden.

21. Verfahren zum Übertragen von Signalen in einem Abdeckungsbereich, wobei das Verfahren Folgendes umfasst:

Berechnen der Signalpfadverzögerung von einer Hosteinheit (120) zu jeder von mehreren entfernten Einheiten, wobei die mehreren entfernten Einheiten gepaart sind, um eine Rückstrahlkonfiguration auszubilden, die mehrere Paare entfernter Einheiten umfasst;
Übertragen eines Signals von der Hosteinheit (120) an jede der mehreren entfernten Einheiten; und
Rundsenden des Signals von jeder der mehreren entfernten Einheiten ungefähr gleichzeitig in einen oder mehrere Abdeckungsbereiche (105) basierend auf den berechneten Signalpfadverzögerungen unter Verwendung von Multiple-Input-Multiple-Output(MIMO)-Techniken, wobei ein Paar entfernter Einheiten (125) platziert ist, um einen Abdeckungsbereich (105) in dem einen oder den mehreren Abdeckungsbereichen (105) zu definieren, wobei jede entfernte Einheit (125) in dem Paar entfernter Einheiten wenigstens teilweise auf die entfernte Einheit zeigt, mit der sie in einer Rückstrahlkonfiguration gepaart ist, wobei die mehreren ungepaarten entfernten Einheiten derart weit voneinander beabstandet sind, dass in der Nähe jeder entfernten Einheit der mehreren entfernten Einheiten Signale von anderen entfernten Einheiten der mehreren ungepaarten entfernten Einheiten vernachlässigbar sind und der Abdeckungsbereich (105) jedes Paars von entfernten Einheiten ziemlich von dem Abdeckungsbereich isoliert ist, der durch andere Paare von entfernten Einheiten in den mehreren Paaren entfernter Einheiten ausgebildet wird, die mit der Hosteinheit (120) gekoppelt sind, wobei die HF-Leistung von Signalen, die durch die entfernten Einheiten emittiert werden, auf einem konstanteren Pegel liegt.

## Revendications

1. Système d'antennes distribuées, DAS (100), comprenant :

une unité hôte (120) ; et
une pluralité d'unités distantes, la pluralité d'unités distantes étant appariées pour former une configuration rétrodirective comprenant plusieurs paires d'unités distantes, une paire d'unités distantes (125) étant placées pour définir une zone de couverture (105) et chaque unité distante en une paire d'unités distantes (125) :

est configurée pour être couplée en communication à l'unité hôte (120) ; et pour pointer
au moins partiellement vers l'unité distante à laquelle elle est appariée dans la configuration rétrodirective, chaque unité distante étant espacée des autres unités distantes non appariées de la pluralité d'unités distantes de telle sorte que près de chaque unité distante, les signaux provenant des autres unités distantes non appariées sont négligeables et la puissance RF des signaux émis depuis les unités distantes est à un niveau plus constant, dans lequel la zone de couverture de chaque paire d'unités distantes est assez isolée de la zone de couverture formée par d'autres paires d'unités distantes dans la pluralité de paires d'unités distantes ; et
est configurée pour diffuser simultanément des données depuis l'unité hôte (120) sur la même bande de fréquences que l'unité distante à laquelle elles sont appariées.

2. Système selon la revendication 1, dans lequel configuré pour diffuser simultanément des données depuis l'unité hôte (120) comprend en outre au moins une première unité distante configurée pour diffuser simultanément sur la même bande de fréquences qu'une seconde unité distante.

**3.** Système selon la revendication 1, dans lequel configuré pour diffuser simultanément des données depuis l'unité hôte (120) comprend en outre dans lequel chacune de la pluralité d'unités distantes est configurée pour recevoir les données avec un décalage de synchronisation différent des données reçues par chacune des autres unités de la pluralité d'unités distantes ; et

dans lequel le décalage de synchronisation entre les données reçues par chaque unité distante est au moins une puce à part les données reçues par chaque autre unité distante.

**4.** Système selon la revendication 3, dans lequel le décalage de synchronisation est obtenu par un retard numérique, un retard analogique ou des combinaisons de ceux-ci.

**5.** Système selon la revendication 1, dans lequel l'unité hôte (120) comprend en outre :

une unité de traitement (122) pouvant être utilisée pour :

calculer un premier retard d'un trajet de signal de l'unité hôte (120) à une première unité distante de la pluralité d'unités distantes ;
calculer un second retard d'un trajet de signal de l'unité hôte (120) à une seconde unité distante de la pluralité d'unités distantes ;
retarder le signal de l'unité hôte (120) à la seconde unité distante de telle sorte que le signal retardé de l'unité hôte (120) arrive à la seconde unité distante au moins un temps de transmission de puce après l'arrivée du signal de l'unité hôte (120) au niveau de la première unité distante ; et
diffuser le signal et le signal retardé approximativement simultanément ; et

une mémoire couplée à l'unité de traitement.

**6.** Système selon la revendication 5, dans lequel la synchronisation du signal retardé est suffisante de telle sorte qu'un récepteur en râteau dans une unité mobile peut résoudre le signal et le signal retardé.

**7.** Système selon la revendication 1, dans lequel la pluralité d'unités distantes fonctionnent sur la même bande de fréquences.

**8.** Système selon la revendication 1, dans lequel le DAS fournit un accès aux paquets d'une liaison descendante haute vitesse, HSDPA, à la zone de couverture (105).

**9.** Système selon la revendication 1, dans lequel le DAS (100) est configuré pour utiliser l'un parmi le codage spatio-temporel, STC, et le multiplexage spatial, SM.

**10.** Système selon la revendication 1, dans lequel chaque unité distante de la paire d'unités distantes (125) est espacée de l'unité distante à laquelle elle est appariée de telle sorte qu'à proximité de chaque unité distante de la paire d'unités distantes (125), un signal provenant de l'unité distante à laquelle il est apparié est négligeable.

**11.** Système selon la revendication 10, dans lequel chaque unité distante est configurée pour diffuser simultanément des données depuis l'unité hôte (120) sur la même bande de fréquences que l'unité distante à laquelle elle est appariée.

**12.** Système selon la revendication 1, dans lequel l'unité hôte (120) comprend en outre :
une interface réseau à coupler en communication avec un émetteur-récepteur de station de base.

**13.** Système selon la revendication 1, dans lequel la pluralité d'unités distantes sont couplées en communication à l'unité hôte (120) à l'aide d'un support de transport sélectionné dans le groupe constitué par un câble coaxial, des connexions à fibre optique, une paire torsadée, une optique d'espace libre, un câble, une onde millimétriques, et des liaisons radiofréquence, RF.

**14.** Système selon la revendication 1, dans lequel la pluralité d'unités distantes :

sont largement espacées les unes des autres ; et
sont appariées pour utiliser des techniques à entrées multiples et sorties multiples, MIMO.

**15.** Système selon la revendication 14, dans lequel l'unité hôte (120) est configurée pour distribuer des signaux d'accès multiple par répartition orthogonale de la fréquence, OFDMA.

**16.** Système selon la revendication 1, comprenant en outre :
un câble rayonnant (1010), dans lequel :

une première extrémité du câble rayonnant (1010) est couplée à une première unité distante et une seconde extrémité du câble rayonnant (1010) est couplée à une seconde unité distante ;
la première unité distante envoie le signal de données sur un trajet aller du câble rayonnant ; et

la seconde unité distante envoie un signal de données retardé sur un trajet inverse du câble rayonnant, le signal de données retardé étant le signal de données avec un décalage de synchronisation.

17. Système selon la revendication 16, comprenant en outre :

un second câble rayonnant ; et

dans lequel le câble rayonnant est agencé pour rayonner une première composante d'un signal de données multiplexé spatialement et le second câble rayonnant est agencé pour rayonner une seconde composante du signal de données multiplexé spatial.

18. Système selon la revendication 1, comprenant en outre :

un dispositif mobile, comprenant :

au moins un émetteur ; et

un récepteur en râteau, le récepteur en râteau comprenant une pluralité de doigts, la pluralité de doigts résolvant un premier signal de données à partir d'un second signal de données, dans lequel il est agencé que les premier et second signaux de données sont reçus dans la zone de couverture (105).

19. Système selon la revendication 1, comprenant en outre :

une pluralité de modules d'émetteur-récepteur radiofréquence numériqueanalogique, DART, couplés à l'unité hôte (120), chaque module DART étant configuré pour fournir un signal à l'unité hôte (120) sur un canal distinct.

20. Système selon la revendication 1, comprenant en outre :

dans lequel chacune de la pluralité d'unités distantes comprend au moins une antenne ;

un premier ensemble de la pluralité d'unités distantes est configuré pour recevoir un premier signal de données ; et

un second ensemble de la pluralité d'unités distantes est configuré pour recevoir un second signal de données ;

dans lequel il est agencé que les premier et second signaux de données sont diffusés approximativement simultanément à partir de l'au moins une antenne de chacune de la pluralité d'unités distantes.

21. Procédé d'émission de signaux dans une zone de couverture, le procédé comprenant :

le calcul du retard de trajet du signal d'une unité hôte (120) vers chacune d'une pluralité d'unités distantes, la pluralité d'unités distantes étant appariées pour former une configuration rétrodirective comprenant plusieurs paires d'unités distantes ;

la transmission d'un signal de l'unité hôte (120) vers chacune de la pluralité d'unités distantes ; et

la diffusion du signal provenant de chacune de la pluralité d'unités distantes approximativement simultanément dans une ou plusieurs zones de couverture (105) sur la base des retards de trajet du signal calculés à l'aide des techniques à entrées multiples et sorties multiples, MIMO, dans lequel une paire d'unités distantes (125) est placée pour définir une zone de couverture (105) dans la ou les zones de couverture (105), chaque unité distante (125) dans la paire d'unités distantes pointant au moins partiellement vers l'unité distante à laquelle elle est appariée dans une configuration rétrodirective, dans laquelle la pluralité d'unités distantes non appariées sont largement espacées les unes des autres de telle sorte que près de chaque unité distante dans la pluralité d'unités distantes, les signaux provenant d'autres unités distantes dans la pluralité d'unités distantes non appariées sont négligeables et la zone de couverture (105) de chaque paire d'unités distantes est assez isolée de la zone de couverture formée à partir d'autres paires d'unités distantes dans la pluralité de paires d'unités distantes couplées à l'unité hôte (120), dans lequel la puissance RF des signaux émis par les unités distantes est à un niveau plus constant.

FIG. 1

EP 2 396 907 B1

FIG. 2A

FIG. 2B

EP 2 396 907 B1

FIG. 2C

FIG. 3A

FIG. 3B

FIG. 4A

EP 2 396 907 B1

FIG. 4B

EP 2 396 907 B1

FIG. 5

EP 2 396 907 B1

600

610 ─┐ CALCULATE A FIRST DELAY OF A SIGNAL PATH FROM A HOST
UNIT TO A FIRST REMOTE UNIT OF A PAIR OF REMOTE UNITS

620 ─┐ CALCULATE A SECOND DELAY OF A SIGNAL PATH FROM THE HOST
UNIT TO A SECOND REMOTE UNIT OF A PAIR OF REMOTE UNITS

630 ─┐ DELAYING THE SIGNAL FROM THE HOST UNIT TO THE SECOND REMOTE SUCH THAT THE
DELAYED SIGNAL ARRIVES AT THE SECOND REMOTE UNIT AT LEAST ONE CHIP
TRANSMISSION TIME AFTER THE SIGNAL ARRIVES AT THE FIRST REMOTE UNIT

640 ─┐ BROADCAST THE SIGNAL AND THE DELAYED SIGNAL
APPROXIMATELY SIMULTANEOUSLY

FIG. 6

700

710 ─┐ CALCULATE SIGNAL PATH DELAY FROM A HOST UNIT
TO EACH OF A PLURALITY OF REMOTE UNITS

720 ─┐ TRANSMIT A SIGNAL FROM THE HOST UNIT TO
EACH OF THE PLURALITY OF REMOTE UNITS

730 ─┐ BROADCAST THE SIGNAL FROM EACH OF THE PLURALITY OF REMOTE UNITS
APPROXIMATELY SIMULTANEOUSLY INTO A COMMON COVERAGE AREA BASED
ON THE CALCULATED SIGNAL PATH DELAY USING MULTIPLE-INPUT-MULTIPLE-OUTPUT
(MIMO) TECHNIQUES, WHEREIN THE PLURALITY OF REMOTE UNITS ARE WIDELY SPACED

FIG. 7

EP 2 396 907 B1

FIG. 8A

FIG. 8B

FIG. 8C

EP 2 396 907 B1

MOBILE DEVICE

_900_

| TRANSMITTER | TRANSMITTER | PROCESSOR | MEMORY |
|:---:|:---:|:---:|:---:|
| _920-1_ | _920-2_ | _930_ | _932_ |

RAKE RECEIVER

_910_

| FINGER | FINGER | . . . | FINGER |
|:---:|:---:|:---:|:---:|
| _912-1_ | _912-2_ | | _912-N_ |

STORAGE MEDIUM

_940_

SOFTWARE

_942_

950-1    950-2    950-N

FIG. 9

FIG. 10

EP 2 396 907 B1

**EP 2 396 907 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 37047409
- US 6308085 B1
- US 627251